# EUROPEAN PATENT APPLICATION

(11) **EP 4 826 967 A1**
(43) Date of publication of application: **21.10.2026**
(21) Application number: 24902185.8
(22) Date of filing: 21.08.2024
(51) Int. Cl.: H02K 5/20, H02K 3/24, H02K 9/19

(54) **ELECTRIC-MOTOR COOLING STRUCTURE**

(30) Priority: 14.12.2023 CN 202311724288; 14.12.2023 CN 202311726164
(71) Applicant: Zhejiang Pangood Power Technology Co., Ltd., Jinhua, Zhejiang 321102 (CN)
(72) Inventor: MA, Xuejian, Jinhua, Zhejiang 321102 (CN); CUI, Haojie, Jinhua, Zhejiang 321102 (CN); ZHANG, Xiaolin, Jinhua, Zhejiang 321102 (CN); WANG, Yiqi, Jinhua, Zhejiang 321102 (CN); HE, Junming, Jinhua, Zhejiang 321102 (CN); HOU, Mingjun, Jinhua, Zhejiang 321102 (CN)
(74) Representative: advotec.
(86) International application number: PCT/CN2024/113583
(87) International publication number: WO 2025/123759

(57) **Abstract**

The present invention relates to the technical field of electric-motor cooling. Disclosed is an electric-motor cooling structure, comprising: an electric-motor housing, a stator core and a coil winding, wherein the electric-motor housing is provided with an oil inlet and an oil outlet; the stator core is arranged in the electric-motor housing, an oil path channel is formed between the stator core and the electric-motor housing, and the oil inlet and the oil outlet are respectively in communication with the oil path channel; the stator core comprises toothed portions, and winding slots are formed between adjacent toothed portions; the coil winding is sleeved on the toothed portions, such that the coil winding is located in the winding slots; and oil trough channels are provided inside the winding slots, and the oil trough channels are located at an axial end portion of the coil winding, and are in communication with the oil path channel, such that a cooling liquid flows into the oil trough channels through the oil path channel to cool the coil winding and dissipate heat therefrom. In the electric-motor cooling structure provided by the present invention, by means of arranging the oil trough channels at the axial end portion of the coil winding, there is no need to rely on oil passages formed between adjacent flat copper wires, thereby improving the applicability of the oil cooling mode.

## Description

The present application claims the priorities to following Chinese Patent Applications, both of which are incorporated herein by reference in their entireties: Chinese Patent Application No. 202311724288.2, titled "ELECTRIC-MOTOR COOLING STRUCTURE", filed on December 14, 2023 with the China National Intellectual Property Administration, and Chinese Patent Application No. 202311726164.8, titled "ELECTRIC-MOTOR COOLING STRUCTURE", filed on December 14, 2023 with the China National Intellectual Property Administration.

### FIELD

The present application relates to the technical field of motor cooling, and in particular to a motor cooling structure.

### BACKGROUND

During the normal operation of a motor, the coils and the stator core generate heat that needs to be dissipated. Insufficient heat dissipation capacity of the motor leads to excessively high temperature of the motor. For the stator, the excessively high temperature can damage insulation of the coils, leading to short circuits and causing the motor to burn out. To ensure safe and reliable operation of the motor, a cooling structure is required for heat dissipation. The cooling methods for the motor mainly include air cooling, water cooling, and oil cooling, among which oil cooling offers the best cooling effect.

In most oil cooling solutions of the conventional technology, an oil path is formed between adjacent flat copper wires in the slots. The normal flow of the entire oil path and the uniform distribution of cooling liquid among the slots largely depend on the manufacturing process of the flat wires. Moreover, the method for forming oil path by using adjacent copper wires in the slots cannot be applied to scenarios involving round copper coils, resulting in poor applicability of the oil cooling method.

Additionally, when the number of coil turns is changed, continuously adjustment of the specifications of the flat wires are required, which increases the overall manufacturing cost of the motor.

Therefore, a technical issue to be addressed by those skilled in the art is to improve the applicability of oil cooling methods.

### SUMMARY

In view of this, an object of the present application is to provide a motor cooling structure to enhance the applicability of oil cooling methods.

In order to achieve the above object, the following technical solutions are provided according to the present application.

A motor cooling structure includes:
a motor housing, where the motor housing is provided with an oil inlet and an oil outlet;
a stator core, disposed in the motor housing, where an oil path channel is formed between the stator core and the motor housing, the oil inlet and the oil outlet are both in communication with the oil path channel, and the stator core includes tooth portions, with winding slots formed between adjacent tooth portions; and
a coil winding, where the coil winding is sleeved on the tooth portions such that the coil winding is located inside the winding slots, the winding slots are provided with oil-groove channels, which are located at an axial end of the coil winding and are in communication with the oil path channel, to allow a cooling liquid to flow into the oil-groove channels to cool the coil winding through the oil path channel to cool the coil winding for heat dissipation.

Optionally, in the motor cooling structure, the stator core includes a yoke portion connected to lower ends of the tooth portions, the coil winding has a first side and a second side opposite to each other, and the first side of the coil winding is adjacent to the yoke portion of the stator core.

A sealing plate is provided inside the motor housing, the sealing plate is located on the second side of the coil winding, multiple raised ribs are uniformly provided on the sealing plate in a circumferential direction, and the raised ribs correspond to the winding slots.

Optionally, in the motor cooling structure, first metal pressing plates are arranged in the winding slots, and the first metal pressing plates are located at the first side of the coil winding or the second side of the coil winding.

Optionally, in the motor cooling structure, the first metal pressing plates are arranged at the first side of the coil winding and abut against the coil winding, the oil-groove channels are formed between the first metal pressing plates and the yoke portion of the stator core, and a first slot wedge is arranged at the second side of the coil winding to fix the coil winding.

Optionally, in the motor cooling structure, the first metal pressing plates are arranged at the second side of the coil winding, the first side of the coil winding abuts against the yoke portion of the stator core, and the oil-groove channels are formed between the first metal pressing plates and the raised ribs of the sealing plate.

Optionally, in the motor cooling structure, the coil winding includes a bottom winding and a top winding, the bottom winding abuts against the yoke portion of the stator core, a second slot wedge is arranged between the top winding and the raised ribs of the sealing plate for fixing the top winding, and the oil-groove channels are formed between the bottom winding and the top winding.

Optionally, in the motor cooling structure, second metal pressing plates are fixed at a bottom of the top winding and a top of the bottom winding respectively, and each of the oil-groove channels is located between corresponding two of the second metal pressing plates.

Optionally, in the motor cooling structure, the coil winding is fixed by means of paint dripping, paint dipping, or potting.

Optionally, in the motor cooling structure, the stator core has an inner cylindrical surface and an outer cylindrical surface, with the inner cylindrical surface close to a motor shaft and the outer cylindrical surface away from the motor shaft. The oil path channel includes a first oil path channel and a second oil path channel, the first oil path channel is provided on a side of the stator core where the inner cylindrical surface is located, the second oil path channel is provided on another side of the stator core where the outer cylindrical surface is located, each of the oil-groove channels is in communication with both the first oil path channel and the second oil path channel, and both the oil inlet and the oil outlet are in communication with the second oil path channel.

Optionally, in the motor cooling structure, round copper wires are wound around the tooth portions to form the coil winding, each of the round copper wires is tightly wound around the corresponding tooth portion in both the axial and radial directions, the corresponding round copper wires of each two adjacent tooth portions are tightly attached to each other, with an adhesive layer being provided between the corresponding round copper wires.

Optionally, in the motor cooling structure, multiple flow baffle elements are uniformly distributed along the circumferential direction on the oil path channel, to enable the cooling liquid to flow in a directional manner.

According to the motor cooling structure provided by the present application, the oil inlet and the oil outlet are provided on the motor housing, the stator core is disposed inside the motor housing, an oil path channel is formed between the motor housing and the stator core, and the oil inlet and the oil outlet are in communication with the oil path channel. Moreover, the coil winding is sleeved on the tooth portions of the stator core, such that the coil winding is located in the winding slots formed between adjacent tooth portions. The oil-groove channels are provided in the winding slots and located at the position corresponding to the axial end of the coil winding, and in communication with the oil path channel. This allows the cooling liquid to enter the oil path channel from the oil inlet of the motor housing, flow into the oil-groove channels through the oil path channel to cool the coil winding in the winding slots, and finally flow out through the oil outlet of the motor housing, thereby achieving heat dissipation from the coil winding.

Compared with the conventional technology, in the motor cooling structure provided by the present application, the oil-groove channels are provided at a position corresponding to the axial end of the coil winding, which eliminates the need to form the oil path between adjacent flat copper wires. The oil-groove channels are located within the winding slots and in communication with the oil path channel, allowing cooling liquid to enter the oil path channel from the oil inlet of the motor housing, flow into the oil-groove channels through the oil path channel to cool the coil winding within the winding slots, and finally flow out through the oil outlet of the motor housing, thereby achieving heat dissipation from the coil winding. With the oil-groove channels be provided axially adjacent to the coil winding, the solution is not only applicable to the coil winding formed by flat copper wires but also applicable to the coil winding formed by round copper wires, thus realizing oil cooling heat dissipation and improving the applicability of oil cooling method. Additionally, when the number of coil turns is changed, unlike flat copper wires, round copper wires require no specification adjustment, so the manufacturing cost of the motor coils will not increase.

### BRIEF DESCRIPTION OF THE DRAWINGS

In order to describe the technical solutions in the embodiments of the present application or in the conventional technology more clearly, the drawings for describing the embodiments or the conventional technology are briefly introduced hereinafter. Apparently, the drawings in the following description show merely the embodiments of the present application, and those skilled in the art can obtain other drawings based on these drawings without creative efforts.
FIG. 1 is an exploded view of a motor cooling structure according to an embodiment of the present application;
FIG. 2 is a schematic structural view of the motor cooling structure according to the embodiment of the present application;
FIG. 3 is a schematic structural view of an oil path in a winding slot according to an embodiment of the present application;
FIG. 4 is a schematic structural view of an oil path in a winding slot according to another embodiment of the present application;
FIG. 5 is a schematic structural view of an oil path in a winding slot according to yet another embodiment of the present application;
FIG. 6 is a schematic structural view of an oil path in a winding slot according to still another embodiment of the present application; and
FIG. 7 is a schematic layout view of a coil winding according to an embodiment of the present application.

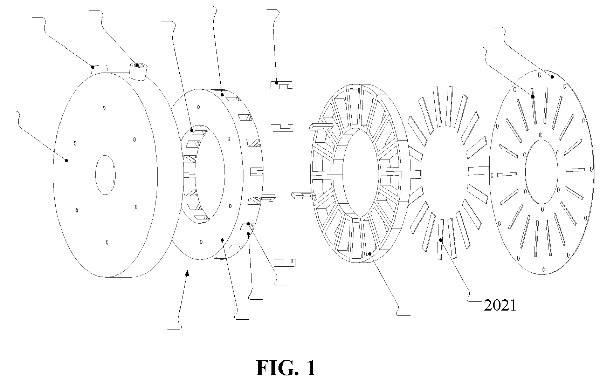

In FIGS. 1 to 7:

| | | | |
|---|---|---|---|
| 100a | motor housing, | 101a | oil inlet, |
| 102a | oil outlet, | 103a | sealing plate, |
| 1031a | raised rib, | 104a | motor shaft, |
| 200a | stator core, | 201a | tooth portion, |
| 202a | winding slot, | 2021a | first metal pressing plate, |
| 2022a | first slot wedge, | 2023a | second slot wedge, |
| 2024a | second metal pressing plate, | 203a | yoke portion, |
| 204a | inner cylindrical surface, | 2041a | first oil path channel, |
| 205a | outer cylindrical surface, | 2051a | second oil path channel, |
| 206a | flow baffle element, | | |
| 300a | coil winding, | 301a | oil-groove channel, |
| 302a | bottom winding, | 303a | top winding, |
| 304a | round copper wire, | 305a | adhesive layer. |

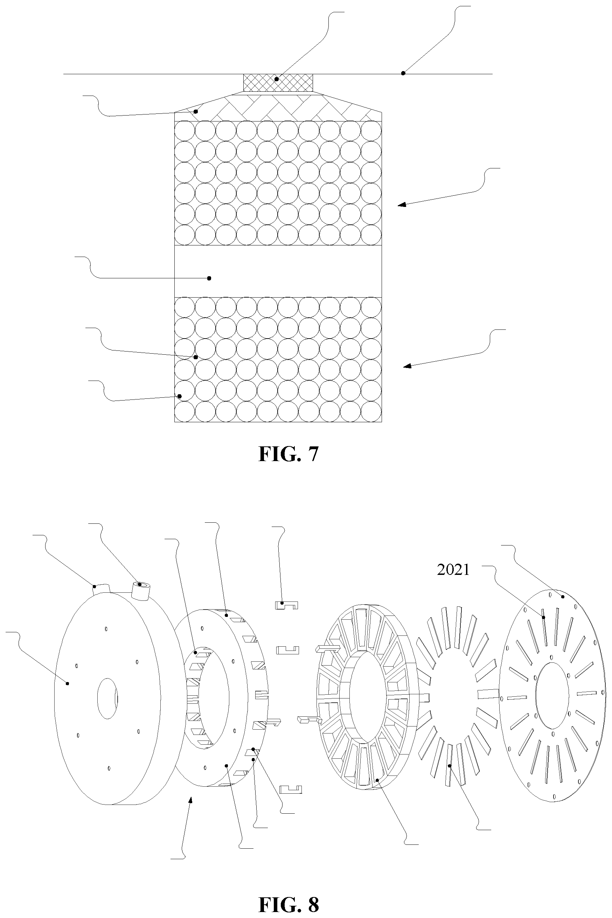

FIG. 8 is an exploded view of a motor cooling structure according to an embodiment of the present application;

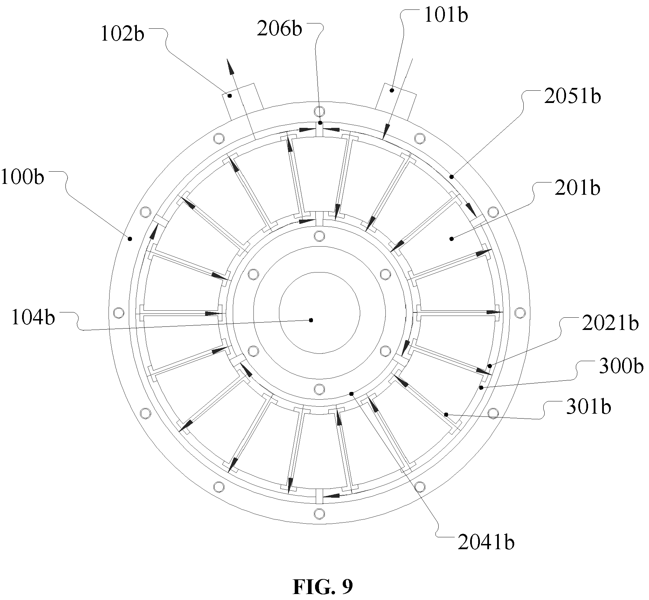

FIG. 9 is a schematic structural view of the motor cooling structure according to the embodiment of the present application;

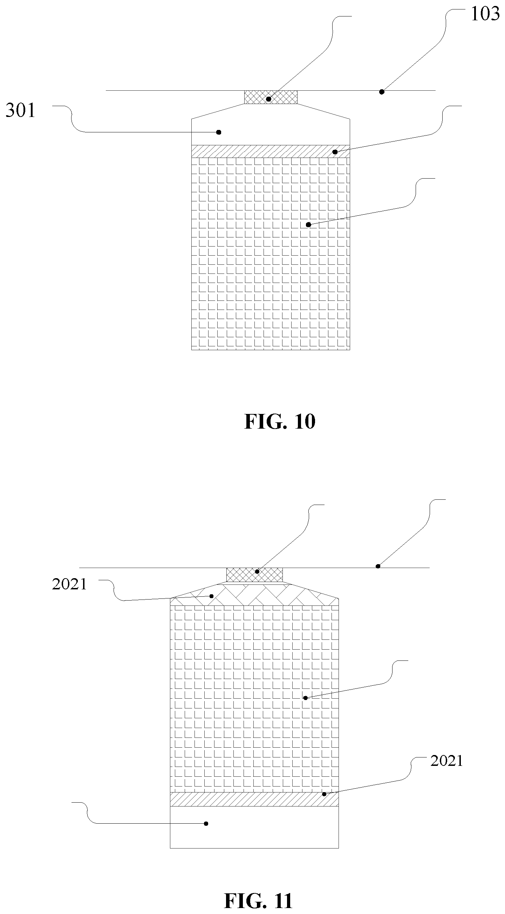

FIG. 10 is a schematic structural view of an oil path in a winding slot according to an embodiment of the present application;
FIG. 11 is a schematic structural view of an oil path in a winding slot according to another embodiment of the present application;

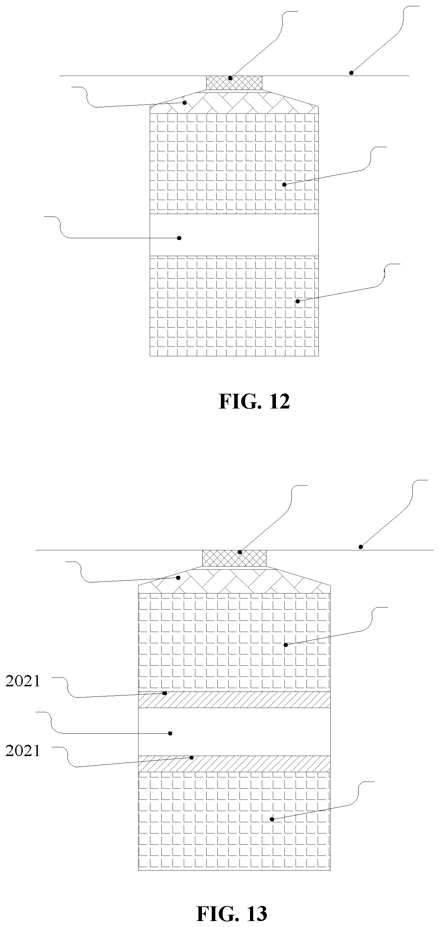

FIG. 12 is a schematic structural view of an oil path in a winding slot according to yet another embodiment of the present application;
FIG. 13 is a schematic structural view of an oil path in a winding slot according to still another embodiment of the present application;

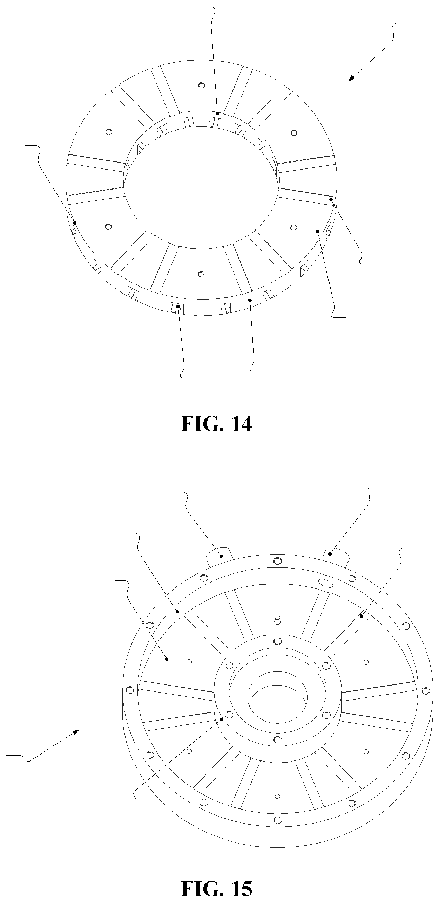

FIG. 14 is a schematic structural view of a stator core according to an embodiment of the present application;
FIG. 15 is a schematic structural view of a motor housing according to an embodiment of the present application; and

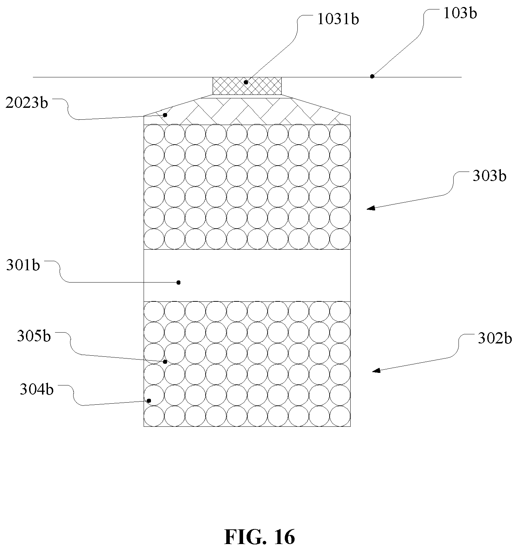

FIG. 16 is a schematic layout view of a coil winding according to an embodiment of the present application.

In FIGS. 8 to 16:

| | | | |
|---|---|---|---|
| 100b | motor housing, | 101b | oil inlet, |
| 102b | oil outlet, | 103b | sealing plate, |
| 1031b | raised rib, | 104b | motor shaft, |
| 105b | housing oil path channel, | 106b | inner ring wall, |
| 107b | outer ring wall, | 108b | bottom wall, |
| 200b | stator core, | 201b | tooth portion, |
| 202b | winding slot, | 2021b | first metal pressing plate, |
| 2022b | first slot wedge, | 2023b | second slot wedge, |
| 2024b | second metal pressing plate, | 203b | yoke portion, |
| 2031b | core oil path channel, | 204b | inner cylindrical surface, |
| 2041b | first oil path channel, | 205b | outer cylindrical surface, |
| 2051b | second oil path channel, | 206b | flow baffle element, |
| 300b | coil winding, | 301b | oil-groove channel, |
| 302b | bottom winding, | 303b | top winding, |
| 304b | round copper wire, | 305b | adhesive layer. |

### DETAILED DESCRIPTION OF THE EMBODIMENTS

### First Embodiment

The core of the present application is to provide a motor cooling structure to enhance the applicability of oil cooling methods.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

As shown in FIG. 1, a motor cooling structure is provided according to an embodiment of the present application, which includes a motor housing 100a, a stator core 200a, and a coil winding 300a. It should be noted that in most oil cooling solutions of the conventional technology, the oil path is formed between adjacent flat copper wires in the slots. The normal flow of the entire oil path and the uniform distribution of cooling liquid among the slots largely depend on the manufacturing process of the flat wires. Moreover, the method of forming the oil path by adjacent copper wires cannot be applied to scenarios with round copper coils, resulting in poor applicability of oil cooling methods. In addition, when the number of coil turns is changed, continuously adjustment of the specifications of the flat wires are required, which increases the overall manufacturing cost of the motor. In the motor cooling structure according to this embodiment of the present application, oil-groove channels 301a are provided at a position corresponding to an axial end of the coil winding 300a, which eliminates the need to form an oil path between adjacent flat copper wires. The oil-groove channels 301a are located in winding slots 202a and are in communication with the oil path channel, allowing the cooling liquid to enter the oil path channel from an oil inlet 101a of the motor housing 100a, flow into the oil-groove channels 301a through the oil path channel to cool the coil winding 300a in the winding slots 202a, and finally flow out through an oil outlet 102a of the motor housing 100a, thereby achieving the effect of dissipating heat from the coil winding 300a. With the oil-groove channels 301a be provided axially adjacent to the coil winding 300a, the solution is not only applicable to the coil winding 300a formed by flat copper wires but also applicable to the coil winding 300a formed by round copper wires, thus realizing oil cooling heat dissipation and improving the applicability of oil cooling method. In addition, when the number of coil turns is changed, unlike flat copper wires, round copper wires require no specification adjustment so the manufacturing cost of the motor coils will not increase.

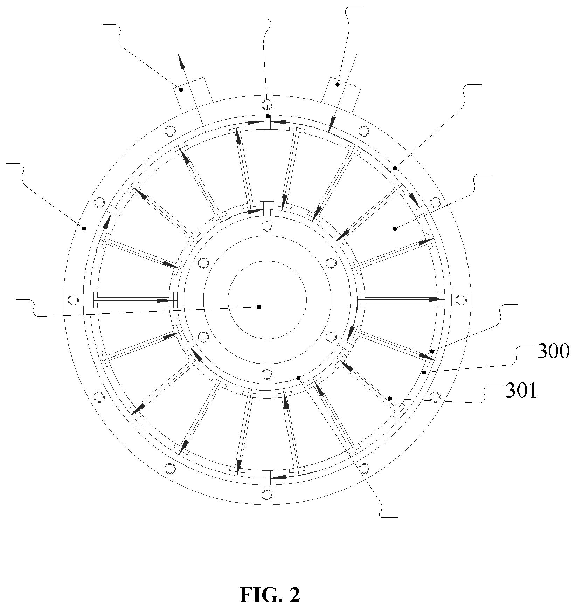

As shown in FIGS. 1 and 2, the motor housing 100a is provided with an oil inlet 101a and an oil outlet 102a, to allow the cooling liquid to enter the motor housing 100a through the oil inlet 101a and exit through the oil outlet 102a, thereby cooling the stator core 200a and the coil winding 300a inside the motor housing 100a. It should be noted that in the present application, unless otherwise specified, cooling oil is used as the cooling liquid to achieve oil cooling.

As shown in FIGS. 1 and 2, the stator core 200a is arranged inside the motor housing 100a, and an oil path channel is formed between the stator core 200a and the motor housing 100a. The oil inlet 101a and the oil outlet 102a are both in communication with the oil path channel. Moreover, the stator core 200a includes tooth portions 201a, and winding slots 202a are formed between adjacent tooth portions 201a. The coil winding 300a is sleeved over the tooth portions 201a so that the coil winding 300a is located in the winding slots 202a. In addition, as shown in FIG. 2, the oil-groove channels 301a are provided within the winding slots 202a, and the oil-groove channels 301a are located at the axial end of the coil winding 300a, that is, the end face of the coil winding 300a in the axial direction. The oil-groove channels 301a are in communication with the oil path channel, allowing the cooling liquid to flow into the oil-groove channels 301a through the oil path channel to cool the coil winding 300a for heat dissipation. The cooling liquid enters the oil path channel through the oil inlet 101a of the motor housing 100a, flows into the oil-groove channels 301a through the oil path channel to cool the coil winding 300a in the winding slots 202a, and then flows out through the oil outlet 102a of the motor housing 100a, achieving the effect of dissipating heat from the coil winding 300a. With the oil-groove channels 301a being provided axially adjacent to the coil winding 300a, the solution is not only applicable to the coil winding 300a formed by flat copper wires but also applicable to the coil winding 300a formed by round copper wires, thus realizing oil cooling heat dissipation and improving the applicability of oil cooling method. In addition, when the number of coil turns is changed, unlike flat copper wires, round copper wires require no specification adjustment so the manufacturing cost of the motor coils will not increase.

Further, as can be seen from FIGS. 1 and 2, the stator core 200a has an inner cylindrical surface 204a and an outer cylindrical surface 205a that are opposite to each other. The inner cylindrical surface 204a is the end face close to the motor shaft 104a, and the outer cylindrical surface 205a is the end face away from the motor shaft 104a. Moreover, the oil path channel includes a first oil path channel 2041a and a second oil path channel 2051a. The first oil path channel 2041a is provided on a side of the stator core 200a where the inner cylindrical surface 204a is located, that is, between the inner cylindrical surface 204a of the stator core 200a and an inner ring wall of the motor housing 100a. The second oil path channel 2051a is provided on another side of the stator core 200a where the outer cylindrical surface 205a is located, that is, between the outer cylindrical surface 205a of the stator core 200a and an outer ring wall of the motor housing 100a. The oil-groove channels 301a are in communication with both the first oil path channel 2041a and the second oil path channel 2051a, and the oil inlet 101a and the oil outlet 102a are both in communication with the second oil path channel 2051a. It should be noted that the stator core 200a is sleeved over an outer side of the inner ring wall of the motor housing 100a, so that the inner ring wall of the motor housing 100a is located at an inner side of the inner cylindrical surface 204a of the stator core 200a, and the outer ring wall of the motor housing 100a is located at an outer side of the outer cylindrical surface 205a of the stator core 200a.

Additionally, as shown in FIG. 2, to ensure the directional flow of the cooling liquid, multiple flow baffle elements 206a are arranged in the oil path channel. Each of the flow baffle elements 206a is provided with a socket, so that the flow baffle element 206a can be plugged onto a protruding part of the coil winding 300a protruding from the tooth portion 201a for connection, which enables better fitting between the flow baffle elements 206a and the coil winding 300a. The flow baffle elements 206a are fixed by gluing. Specifically, for ease of understanding, the flow baffle elements 206a arranged in the first oil path channel 2041a are defined as the first flow baffle elements, and the flow baffle elements 206a arranged in the second oil path channel 2051a are defined as the second flow baffle elements. In addition, each tooth portion 201a of the stator core 200a has a proximal end and a distal end opposite to each other. The proximal end of the tooth portion 201a is the end closer to the motor shaft 104a, while the distal end of the tooth portion 201a is the end away from the motor shaft 104a. Furthermore, the first flow baffle element is plugged via its socket onto the protruding part of the coil winding 300a protruding from the proximal end of the tooth portion 201a, to block the flow of the cooling liquid along the first oil path channel 2041a, and ensure that the cooling liquid flows from the first oil path channel 2041a to the oil-groove channels 301a and then from the oil-groove channels 301a to the second oil path channel 2051a, thereby achieving the directional flow of the cooling liquid from the first oil path channel 2041a to the second oil path channel 2051a via the oil-groove channels 301a. Similarly, the second flow baffle element is plugged via its socket onto the protruding part of the coil winding 300a protruding from the distal end of the tooth portion 201a, to block the flow of the cooling liquid along the second oil path channel 2051a, and ensure that the cooling liquid flows from the second oil path channel 2051a to the oil-groove channels 301a and then from the oil-groove channels 301a to the first oil path channel 2041a, thereby achieving the directional flow of the cooling liquid from the second oil path channel 2051a to the first oil path channel 2041a via the oil-groove channels 301a. It should be noted that the arrows in FIG. 2 indicate the flow direction of the cooling liquid.

As shown in FIG. 2, in a specific embodiment, there are three first flow baffle elements and four second flow baffle elements. To ensure uniform distribution of the cooling liquid in the oil-groove channels 301a and maintain normal flow throughout the entire oil cooling circulation loop, the first flow baffle elements and the second flow baffle elements are respectively arranged in an alternative manner along the circumferential direction, with one arranged every three oil-groove channels 301a. This configuration creates an alternating flow pattern where the cooling liquid follows a three-in, three-out path and finally flows out through the oil outlet 102a on the motor housing 100a. Of course, neither the number nor the arrangement of the first and second flow baffle elements is limited to the embodiment described above. For example, there could be four first flow baffle elements and three second flow baffle elements, or the like. The specific solution is similar to the above embodiment and will not be described in detail here. It should be noted that in the above embodiment, "three-in" of the cooling liquid refers to the cooling liquid entering the first oil path channel 2041a from the second oil path channel 2051a via three adjacent oil-groove channels 301a, and "three-out" of the cooling liquid refers to the cooling liquid flowing out from the first oil path channel 2041a to the second oil path channel 2051a via three adjacent oil-groove channels 301a.

According to the motor cooling structure disclosed in the embodiments of the present application, the oil inlet 101a and the oil outlet 102a are provided on the motor housing 100a, the stator core 200a is disposed inside the motor housing 100a, the oil path channel is formed between the stator core 200a and the motor housing 100a, and the oil inlet 101a and the oil outlet 102a are in communication with the oil path channel. Moreover, the coil winding 300a is sleeved on the tooth portions 201a of the stator core 200a, such that the coil winding 300a is located in the winding slots 202a formed between the adjacent tooth portions 201a. The oil-groove channels 301a are provided in the winding slots 202a and located at the position corresponding to the axial end of the coil winding 300a, and in communication with the oil path channel. This allows the cooling liquid to enter the oil path channel from the oil inlet 101a of the motor housing 100a, flow into the oil-groove channels 301a through the oil path channel to cool the coil winding 300a in the winding slots 202a, and finally flow out through the oil outlet 102a on the motor housing 100a, thus achieving heat dissipation from the coil winding 300a.

Compared with the conventional technology, in the motor cooling structure disclosed in the embodiments of the present application, the oil-groove channels 301a are provided at a position corresponding to the axial end of the coil winding 300a, which eliminates the need to form the oil path between adjacent flat copper wires. The oil-groove channels 301a are located within the winding slots 202a and in communication with the oil path channel, allowing the cooling liquid to enter the oil path channel from the oil inlet 101a of the motor housing 100a, flow into the oil-groove channels 301a through the oil path channel to cool the coil winding 300a within the winding slots 202a, and finally flow out through the oil outlet 102a of the motor housing 100a, thereby achieving heat dissipation from the coil winding 300a. With the oil-groove channels 301a be provided axially adjacent to the coil winding 300a, the solution is not only applicable to the coil winding 300a formed by flat copper wires but also applicable to the coil winding formed by round copper wires, thus realizing oil cooling heat dissipation and improving the applicability of oil cooling. Additionally, when the number of coil turns is changed, unlike flat copper wires, round copper wires require no specification adjustment, so the manufacturing cost of the motor coils will not increase.

Further, as shown in FIG. 1, the stator core 200a includes a yoke portion 203a connected to lower ends of the tooth portions 201a, and the coil winding 300a has a first side and a second side positioned opposite each other. The first side of the coil winding 300a is close to the yoke portion 203a of the stator core 200a, and the second side is away from the yoke portion 203a of the stator core 200a. In addition, a sealing plate 103a is provided inside the motor housing 100a, located at the second side of the coil winding 300a. The sealing plate 103a has multiple raised ribs 1031a uniformly provided along its circumferential direction, corresponding to the winding slots 202a. Specifically, the sealing plate 103a has a first side surface and a second side surface opposite to each other, with the raised ribs 1031a being provided on the first side surface of the sealing plate 103a to enhance its rigidity. The second side surface of the sealing plate 103a is in contact with an air gap, which is the gap between the stator and the rotor. Besides, the second side surface of the sealing plate 103a is a smooth plane, which reduces the friction coefficient, effectively reduces losses caused by friction between the rotor and the air during rotation, thereby reducing the temperature rise of the magnetic steel and improving motor efficiency.

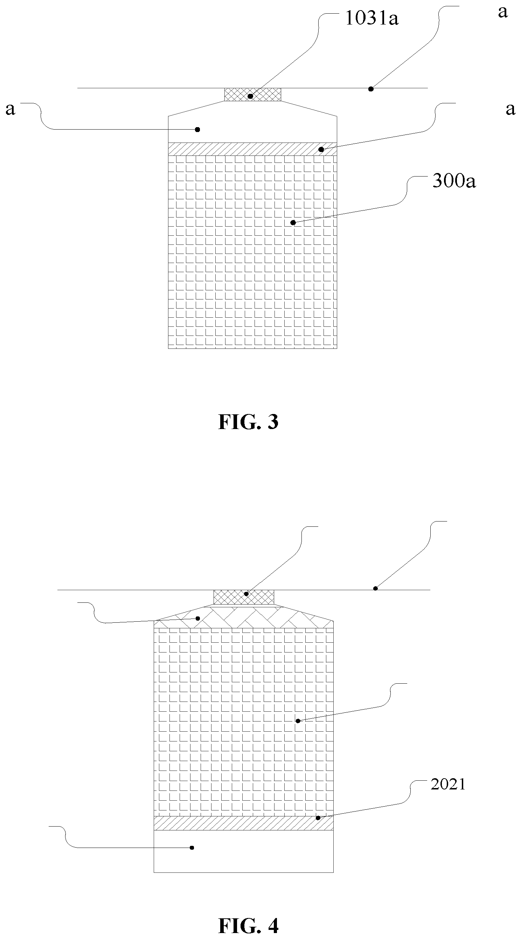

Further, as shown in FIGS. 3 and 4, in a specific embodiment, first metal pressing plates 2021a are arranged in the winding slots 202a, located on either the first side or the second side of the coil winding 300a. Specifically, as shown in FIG. 3, the coil winding 300a is first sleeved on the tooth portions 201a of the stator core 200a, with the first side of the coil winding 300a abutting against the yoke portion 203a of the stator core 200a. The first metal pressing plates 2021a are pressed from the second side of the coil winding 300a, to form the oil-groove channels 301a between the first metal pressing plates 2021a and the raised ribs 1031a of the sealing plate 103a, such that the cooling liquid is able to flow into the oil-groove channels 301a for heat dissipation of the coil winding 300a. The first metal pressing plates 2021a are arranged on the second side of the coil winding 300a to serve as a slot wedge, so as to fix the coil winding 300a within the winding slots 202a and better transfer the heat generated by the coil winding 300a to the cooling liquid in the oil-groove channels 301a, thereby improving heat dissipation efficiency.

Alternatively, as shown in FIG. 4, the first metal pressing plates 2021a may be arranged at the first side of the coil winding 300a, and the first metal pressing plates 2021a abut against the coil winding 300a to form the oil-groove channels 301a between the first metal pressing plates 2021a and the yoke portion 203a of the stator core 200a. To secure the coil winding 300a, first slot wedges 2022a are arranged at the second side of the coil winding 300a, with a certain gap between each of the first slot wedges 2022a and the corresponding raised rib 1031a of the sealing plate 103a. This prevents the force acting on the coil winding 300a during motor operation from being transmitted to the sealing plate 103a through the first slot wedges 2022a, which could otherwise reduce the sealing effect. With the first metal pressing plates 2021a arranged on the first side of the coil winding 300a, the eddy current loss of the first metal pressing plates 2021a is reduced, while the contact area between the cooling liquid and the stator core 200a is increased, thereby improving the heat dissipation effect of the motor.

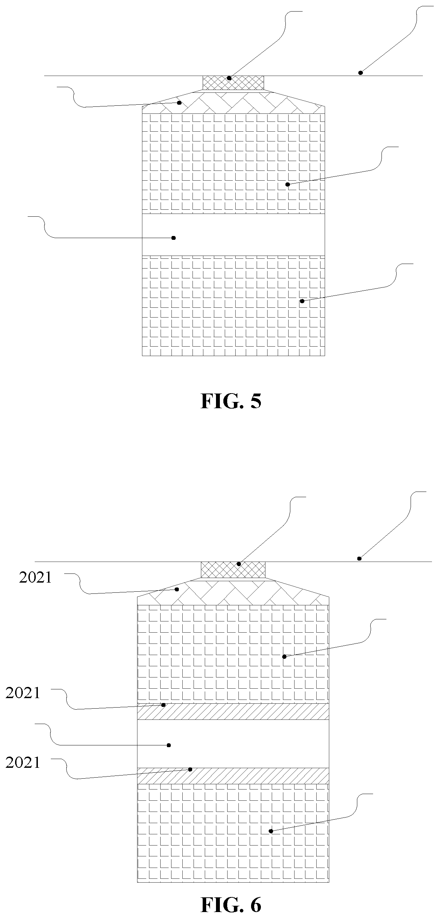

As shown in FIG. 5, in another specific embodiment, the coil winding 300a includes a bottom winding 302a and a top winding 303a. The bottom winding 302a abuts against the yoke portion 203a of the stator core 200a, and a second slot wedge 2023a is arranged between the top winding 303a and the corresponding raised rib 1031a of the sealing plate 103a to secure the top winding 303a. There is also a certain gap between the second slot wedge 2023a and the corresponding raised rib 1031a of the sealing plate 103a, preventing the force acting on the coil winding 300a during motor operation from being transmitted to the sealing plate 103a through the second slot wedges 2023a, which could otherwise reduce the sealing effect. In addition, the oil-groove channels 301a are formed between the bottom winding 302a and the top winding 303a. In this embodiment, the bottom winding 302a and the top winding 303a may be secured through manners such as drip painting, dip painting, or potting. By forming the oil-groove channels 301a between the bottom winding 302a and the top winding 303a, the cooling liquid directly contacts the coil winding 300a, achieving optimal heat dissipation performance and increasing the slot fill factor of the motor, although the fixing process for the coil winding 300a is relatively complex.

Furthermore, as shown in FIG. 7, the coil winding 300a employs round copper wires 304a, which are wound around the tooth portions 201a to form the coil winding 300a. Specifically, each of the round copper wires 304a is tightly wound around the corresponding tooth portion 201a in both axial and radial directions of the tooth portion 201a, and the corresponding round copper wires 304a on each two adjacent tooth portions 201a are tightly attached to each other. In this embodiment, as shown in FIG. 7, the number of round copper wires 304a arranged horizontally (from the perspective of FIG. 7), i.e., along the radial direction of the tooth portions 201a, is ten, and the number arranged vertically (from the perspective of FIG. 7), i.e., along the axial direction of the tooth portions 201a, is twelve. In a case that the oil-groove channels 301a are provided between the bottom winding 302a and the top winding 303a, each of the bottom winding 302a and the top winding 303a may have six vertically arranged (from the perspective of FIG. 7) round copper wires 304a, to fully utilize the space within the winding slots 202a and thus increasing the slot fill factor of the motor. In addition, as shown in FIG. 7, adhesive layers 305a are provided between the round copper wires 304a. In this embodiment, the adhesive layers 305a are formed between the round copper wires 304a through a potting process to bond and secure the round copper wires 304a to each other.

As shown in FIG. 6, to reduce the difficulty of the fixing process for the coil winding 300a, second metal pressing plates 2024a are fixed at a bottom of the top winding 303a and a top of the bottom winding 302a, respectively, with each of the oil-groove channels 301a being formed between corresponding two of the second metal pressing plates 2024a. With the two second metal pressing plates 2024a and the oil-groove channel 301a formed in the middle region of the coil winding 300a, the coil winding 300a is divided into two parts, namely the bottom winding 302a and the top winding 303a. This reduces the difficulty of fixing the coil winding 300a while improving the heat dissipation performance of the motor.

The terms such as "first", "second" and the like in the specification, claims, and accompanying drawings of the present application are intended to distinguish different objects rather than describe a particular sequence. Moreover, the terms "comprise", "include", and any variations thereof are intended to cover non-exclusive inclusion. For example, a process, method, system, product, or device that includes a series of steps or units is not limited to the listed steps or units, but may include steps or units that are not listed.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

### Second Embodiment

The core of the present application is to provide a self-locking electrical connection structure to enhance the heat dissipation performance of motor oil cooling methods.

Another core aspect of the present application is to provide a high-voltage switchgear device having the self-locking electrical connection structure.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

As shown in FIG. 8, a motor cooling structure is provided according to an embodiment of the present application, which includes a motor housing 100b, a stator core 200b, and a coil winding 300b. It should be noted that in most oil cooling solutions of the conventional technology, the oil path is formed between adjacent flat copper wires in the slots. The normal flow of the entire oil path and the uniform distribution of cooling liquid among the slots largely depend on the manufacturing process of the flat wires. Moreover, the method of forming the oil path by adjacent copper wires cannot be applied to scenarios with round copper coils, resulting in poor applicability of oil cooling methods. Furthermore, the heat generated by the stator core is only dissipated through oil paths formed by adjacent flat copper wires within the slots, leading to low heat dissipation efficiency of the stator core and limited heat dissipation performance of oil cooling methods for motor, thereby affecting the overall heat dissipation of the motor and reducing its operating efficiency. In addition, when the number of coil turns is changed, continuously adjustment of the specifications of the flat wires are required, which increases the overall manufacturing cost of the motor. In the motor cooling structure according to this embodiment of the present application, oil-groove channels 301b are provided at a position corresponding to an axial end of the coil winding 300b, which eliminates the need to form an oil path between adjacent flat copper wires. The oil-groove channels 301b are located in winding slots 202b and are in communication with the oil path channel, allowing the cooling liquid to enter the oil path channel from the oil inlet 101b of the motor housing 100b, flow into the oil-groove channels 301b through the oil path channel to cool the coil winding 300b within the winding slots 202b, and finally flow out through an oil outlet 102b of the motor housing 100b, thereby achieving the effect of dissipating heat from the coil winding 300b. With the oil-groove channels 301b be provided axially adjacent to the coil winding 300b, the solution is not only applicable to the coil winding formed by flat copper wires, but also applicable to the coil winding 300a formed by round copper wires, thus realizing oil cooling heat dissipation and improving the applicability of oil cooling method. Additionally, with a housing oil path channel 105b being provided on the motor housing 100b and a core oil path channel 2031b being provided on the stator core 200b, not only is the heat dissipation performance of oil cooling methods of motor improved, but the pressure drops of the cooling liquid at the oil inlet 101b and oil outlet 102b on the motor housing 100b are also effectively reduced. Furthermore, the number of coil turns is changed, unlike flat copper wires, round copper wires require no specification adjustment, so the manufacturing cost of the motor coils will not increase.

As shown in FIGS. 8 and 9, the motor housing 100b is provided with an oil inlet 101b and an oil outlet 102b, allowing the cooling liquid to enter the motor housing 100b through the oil inlet 101b and exit through the oil outlet 102b, thereby cooling the stator core 200b and the coil winding 300b inside the motor housing 100b. It should be noted that in the present application, unless otherwise specified, cooling oil is used as the cooling liquid to achieve oil cooling.

As shown in FIGS. 8 and 9, the stator core 200b is arranged inside the motor housing 100b, and an oil path channel is formed between the stator core 200b and the motor housing 100b. The oil inlet 101b and the oil outlet 102b both in communication with the oil path channel. Moreover, the stator core 200b includes tooth portions 201b, and winding slots 202b are formed between adjacent tooth portions 201b. The coil winding 300b is sleeved over the tooth portions 201b, so that the coil winding 300b is located in the winding slots 202b. In addition, as shown in FIG. 9, the oil-groove channels 301b are provided within the winding slots 202b, and the oil-groove channels 301b are located at the axial end of the coil winding 300b, that is, the end face of the coil winding 300b in the axial direction. The oil-groove channels 301b are in communication with the oil path channel, allowing the cooling liquid to flow into the oil-groove channels 301b through the oil path channel to cool the coil winding 300b for heat dissipation. The cooling liquid enters the oil path channel through the oil inlet 101b of the motor housing 100b, flows into the oil-groove channels 301b through the oil path channel to cool the coil winding 300b in the winding slots 202b, and then flows out through the oil outlet 102b of the motor housing 100b, achieving the effect of dissipating heat from the coil winding 300b. With the oil-groove channels 301b being provided axially adjacent to the coil winding 300b, the solution is not only applicable to the coil winding 300b formed by flat copper wires but also applicable to the coil winding 300b formed by round copper wires, thus realizing oil cooling heat dissipation and improving the applicability of oil cooling method. Additionally, the number of coil turns is changed, unlike flat copper wires, round copper wires require no specification adjustment, so the manufacturing cost of the motor coils will not increase.

Moreover, as shown in FIGS. 14 and 15, a housing oil path channel 105b in communication with the oil path channel is provided on the motor housing 100b, allowing the cooling liquid to flow from the oil path channel into the housing oil path channel 105b, thereby improving the heat dissipation performance of the motor housing 100b and the stator core 200b. Alternatively, a core oil path channel 2031b in communication with the oil path channel may be provided on the stator core 200b, allowing the cooling liquid to flow from the oil path channel into the core oil path channel 2031b, increasing the contact area between the cooling liquid and the stator core 200b and thereby improving the heat dissipation efficiency of the stator core 200b. Of course, the solution may be that the motor housing 100b is provided with the housing oil path channel 105b and the stator core 200b is provided with the core oil path channel 2031b, which increases the contact area between the cooling liquid and the stator core 200b. By providing the housing oil path channel 105b on the motor housing 100b and the core oil path channel 2031b on the stator core 200b, not only is the heat dissipation performance of oil cooling method for motor improved, but the pressure drops of the cooling liquid at the oil inlet 101b and oil outlet 102b on the motor housing 100b are also effectively reduced.

Further, as shown in FIGS. 8 and 14, the stator core 200b includes a yoke portion 203b, and the yoke portion 203b has two side surfaces opposite to each other. To facilitate understanding, the two side surfaces of the yoke portion 203b are defined as a first side surface and a second side surface, respectively. The tooth portions 201b of the stator core 200b are connected to the first side surface of the yoke portion 203b, the second side surface of the yoke portion 203b abuts against the motor housing 100b, and the core oil path channel 2031b is provided on the second side surface of the yoke portion 203b. In addition, the coil winding 300b has a first side and a second side that are oppositely provided, where the first side of the coil winding 300b is close to the first side surface of the yoke portion 203b, and the second side of the coil winding 300b is away from the yoke portion 203b of the stator core 200b. In addition, as shown in FIGS. 8 and 15, the motor housing 100b includes a bottom wall 108b that abuts against the second side surface of the yoke portion 203b, and the housing oil path channel 105b is provided on the bottom wall 108b of the motor housing 100b. A sealing plate 103b is provided inside the motor housing 100b, and the sealing plate 103b is located on the second side of the coil winding 300b. The sealing plate 103b is uniformly provided with multiple raised ribs 1031b along the circumferential direction, and the raised ribs 1031b correspond to the winding slots 202b. Specifically, the sealing plate 103b has a first side surface and a second side surface that are oppositely provided, and the raised ribs 1031b are provided on the first side surface of the sealing plate 103b to improve the rigidity of the sealing plate 103b. In addition, the second side surface of the sealing plate 103b is in contact with the air gap, which is the gap between the stator and the rotor. Besides, the second side surface of the sealing plate 103b is a smooth plane, which reduces the friction coefficient, effectively reduces losses caused by friction between the rotor and the air during rotation, thereby reducing the temperature rise of the magnetic steel and improving the motor efficiency.

Further, as can be seen from FIGS. 8, 9, and 15, the motor housing 100b includes an inner ring wall 106b and an outer ring wall 107b opposite to each other, and a mounting cavity for mounting the stator core 200b is defined by the inner ring wall 106b, the outer ring wall 107b, and the bottom wall 108b. The stator core 200b has an inner cylindrical surface 204b and an outer cylindrical surface 205b that are oppositely provided, with the inner cylindrical surface 204b close to the motor shaft 104b and the outer cylindrical surface 205b away from the motor shaft 104b. The stator core 200b is sleeved on the outer side of the inner ring wall 106b of the motor housing 100b so that the inner ring wall 106b of the motor housing 100b is located on the inner side of the inner cylindrical surface 204b of the stator core 200b, and the outer ring wall 107b of the motor housing 100b is located on the outer side of the outer cylindrical surface 205b of the stator core 200b. The oil path channel includes a first oil path channel 2041b and a second oil path channel 2051b. The first oil path channel 2041b is provided on a side of the stator core 200b where the inner cylindrical surface 204b is located, that is, between the inner cylindrical surface 204b of the stator core 200b and the inner ring wall 106b of the motor housing 100b. The second oil path channel 2051b is provided on another side of the of the stator core 200b where the outer cylindrical surface 205b is located, that is, between the outer cylindrical surface 205b of the stator core 200b and the outer ring wall 107b of the motor housing 100b. Each of the oil-groove channels 301b is in communication with both the first oil path channel 2041b and the second oil path channel 2051b, and both the oil inlet 101b and the oil outlet 102b are in communication with the second oil path channel 2051b.

Further, as shown in FIG. 14, in a specific embodiment, multiple first grooves are formed on the second side surface of the yoke portion 203b, and the first grooves are distributed along the circumferential direction of the stator core 200b to form the core oil path channel 2031b. Specifically, the first groove is an elongated groove, and the first groove extends from the inner cylindrical surface 204b of the stator core 200b to the outer cylindrical surface 205b of the stator core 200b, so that the first groove is in communication with both the first oil path channel 2041b and the second oil path channel 2051b, to ensure that the cooling liquid can circulate among the first oil path channel 2041b, the core oil path channel 2031b, and the second oil path channel 2051b, which increases the contact area between the cooling liquid and the stator core 200b, thereby not only improving the heat dissipation efficiency of the stator core 200b, but also effectively reducing the pressure drops of the cooling liquid at the oil inlet 101b and the oil outlet 102b on the motor housing 100b. Of course, the first grooves are not limited to elongated grooves, and may also be annular grooves distributed along the radial direction of the stator core 200b, and the annular grooves are in communication with each other through the elongated grooves, which increases the contact area between the cooling liquid and the stator core 200b and thereby improving the heat dissipation effect of the oil cooling method for the motor.

Further, as shown in FIG. 15, in a specific embodiment, multiple second grooves are provided on the bottom wall 108b of the motor housing 100b, and the second grooves are distributed along the circumferential direction of the motor housing 100b to form the housing oil path channel 105b. Specifically, the second groove is an elongated groove extending from the inner ring wall 106b of the motor housing 100b to the outer ring wall 107b of the motor housing 100b, so that the second groove is in communication with both the first oil path channel 2041b and the second oil path channel 2051b, to ensure that the cooling liquid can circulate among the first oil path channel 2041b, the housing oil path channel 105b, and the second oil path channel 2051b, which increases the contact area of the cooling liquid with the motor housing 100b and the stator core 200b, thereby not only improving the heat dissipation efficiency of the stator core 200b, but also effectively reducing the pressure drops of the cooling liquid at the oil inlet 101b and the oil outlet 102b on the motor housing 100b. Of course, the second grooves are not limited to elongated grooves, and may also be annular grooves distributed along the radial direction of the motor housing 100b, and the annular grooves are in communication with each other through the elongated grooves, which increases the contact area of the cooling liquid with the motor housing 100b and the stator core 200b, and thereby improving the heat dissipation effect of the oil cooling method for the motor.

In addition, as shown in FIG. 9, to ensure the directional flow of the cooling liquid, multiple flow baffle elements 206b are provided in the oil path channel. Each of the flow baffle elements 206b is provided with a socket, so that the flow baffle elements 206b can be plugged onto a protruding part of the coil winding 300b protruding from the tooth portion 201b for connection, which enables better fitting between the flow baffle elements 206b and the coil winding 300b. The flow baffle elements 206b are fixed by gluing. Specifically, for the sake of easy understanding, the flow baffle elements 206b arranged in the first oil path channel 2041b are defined as the first flow baffle elements, and the flow baffle elements 206b arranged in the second oil path channel 2051b are defined as the second flow baffle elements. In addition, each tooth portion 201b of the stator core 200b has a proximal end and a distal end opposite to each other. The proximal end of the tooth portion 201b is the end close to the motor shaft 104b, while the distal end of the tooth portion 201b is the end away from the motor shaft 104b. Moreover, the first flow baffle element is plugged via its socket onto the protruding part of the coil winding 300b protruding from the proximal end of the tooth portion 201b, to block the flow of the cooling liquid along the first oil path channel 2041b, and ensure that the cooling liquid flows from the first oil path channel 2041b to the oil-groove channels 301b and then from the oil-groove channels 301b to the second oil path channel 2051b, thereby achieving the directional flow of the cooling liquid from the first oil path channel 2041b to the second oil path channel 2051b via the oil-groove channels 301b. Similarly, the second flow baffle element is plugged via its socket onto the protruding part of the coil winding 300b protruding from the distal end of the tooth portion 201b, to block the flow of the cooling liquid along the second oil path channel 2051b, and ensure that the cooling liquid flows from the second oil path channel 2051b to the oil-groove channels 301b and then from the oil-groove channels 301b to the first oil path channel 2041b, thereby achieving the directional flow of the cooling liquid from the second oil path channel 2051b to the first oil path channel 2041b via the oil-groove channels 301b. It should be noted that the arrows in FIG. 9 indicate the flow direction of the cooling liquid.

As shown in FIG. 9, in a specific embodiment, there are three first flow baffle elements and four second flow baffle elements. To ensure uniform distribution of the cooling liquid in the oil-groove channels 301b and maintain normal flow throughout the entire oil cooling circulation loop, the first flow baffle elements and the second flow baffle elements are respectively arranged in an alternative manner along the circumferential direction, that is, with one arranged every three oil-groove channels 301b. This configuration creates an alternating flow pattern where the cooling liquid follows a three-in, three-out path and finally flows out through the oil outlet 102b on the motor housing 100b. Of course, neither the number nor the arrangement of the first and second flow baffle elements is limited to the embodiment described above. For example, there could be four first flow baffle elements and three second flow baffle elements, or the like. The specific solution is similar to the above embodiment and will not be repeated here. It should be noted that in the above embodiment, "three-in" of the cooling liquid refers to the cooling liquid entering the first oil path channel 2041b from the second oil path channel 2051b via three adjacent oil-groove channels 301b, and "three-out" of the cooling liquid refers to the cooling liquid flowing out from the first oil path channel 2041b to the second oil path channel 2051b via three adjacent oil-groove channels 301b.

It should be noted that the flow baffle elements 206b can not only block the cooling liquid in the oil path channel to make the cooling liquid circulate in a predetermined direction in the oil-groove channels 301b and the oil path channel, but also ensure that the cooling liquid circulates in a predetermined direction in the oil path channel, the core oil path channel 2031b, and the housing oil path channel 105b. This creates an inflow-outflow cooling circulation loop between the motor housing 100b and the stator core 200b, with the cooling liquid ultimately being discharged through the oil outlet 102b on the motor housing 100b, thereby achieving heat dissipation for both the motor housing 100b and the stator core 200b.

According to the motor cooling structure disclosed in the embodiments of the present application, the oil inlet 101b and the oil outlet 102b are provided on the motor housing 100b, the stator core 200b is disposed inside the motor housing 100b, the oil path channel is formed between the stator core 200b and the motor housing 100b, and the oil inlet 101b and oil outlet 102b are in communication with the oil path channel. Additionally, the coil winding 300b is sleeved on the tooth portions 201b of the stator core 200b such that the coil winding 300b is located in the winding slots 202b formed between adjacent tooth portions 201b. The oil-groove channels 301b are provided in the winding slots 202b and located at the position corresponding to the axial end of the coil winding 300b, and in communication with the oil path channel. This allows the cooling liquid to enter the oil path channel from the oil inlet 101b on the motor housing 100b, flow into the oil-groove channels 301b through the oil path channel to cool the coil winding 300b in the winding slots 202b, and finally flow out through the oil outlet 102b on the motor housing 100b, thus achieving heat dissipation from the coil winding 300b. Furthermore, the housing oil path channel 105b in communication with the oil path channel may be provided on the motor housing 100b, to enable the cooling liquid to flow from the oil path channel into the housing oil path channel 105b, and thus enhancing the heat dissipation of the motor housing 100b and the stator core 200b. A core oil path channel 2031b in communication with the oil path channel may be provided on the stator core 200b, to enable the cooling liquid to flow from the oil path channel into the core oil path channel 2031b, which increases the contact area between the cooling liquid and the stator core 200b, and thereby improving the heat dissipation efficiency of the stator core 200b.

Compared with the conventional technology, in the motor cooling structure disclosed in the embodiments of the present application, the oil-groove channels 301b are provided at a position corresponding to the axial end of the coil winding 300b, which eliminates the need to form the oil path between adjacent flat copper wires. The oil-groove channels 301b are located within the winding slots 202b and in communication with the oil path channel, allowing the cooling liquid to enter the oil path channel from the oil inlet 101b on the motor housing 100b, flow into the oil-groove channels 301b through the oil path channel to cool the coil winding 300b within the winding slots 202b, and finally flow out through the oil outlet 102b on the motor housing 100b, thereby achieving heat dissipation from the coil winding 300b. With the oil-groove channels 301b be provided axially adjacent to the coil winding 300b, the solution is not only applicable to the coil winding 300b formed by flat copper wires but also applicable to the coil winding formed by round copper wires, thus realizing oil cooling heat dissipation and improving the applicability of oil cooling. Furthermore, with the housing oil path channel 105b provided on the motor housing 100b and the core oil path channel 2031b provided on the stator core 200b, not only the heat dissipation effect of the oil cooling method for motor is improved, but also the pressure drops of the cooling liquid at the oil inlet 101b and oil outlet 102b on the motor housing 100b are also effectively reduced. Additionally, when the number of coil turns is changed, unlike flat copper wires, round copper wires require no specification adjustment, so the manufacturing cost of the motor coils will not increase.

Further, as shown in FIGS. 10 and 11, in a specific embodiment, first metal pressing plates 2021b are arranged in the winding slots 202b, located on either the first side or the second side of the coil winding 300b. Specifically, as shown in FIG. 10, the coil winding 300b is first sleeved on the tooth portions 201b of the stator core 200b, with the first side of the coil winding 300b abutting against the first side surface of the yoke portion 203b of the stator core 200b. The first metal pressing plates 2021b are pressed from the second side of the coil winding 300b, to form the oil-groove channels 301b formed between the first metal pressing plates 2021b and the raised ribs 1031b of the sealing plate 103b, such that the cooling liquid is able to flow into the oil-groove channels 301b for heat dissipation of the coil winding 300b. The first metal pressing plates 2021b are arranged on the second side of the coil winding 300b to serve as a slot wedge, so as to fix the coil winding 300b within the winding slots 202b and better transfer the heat generated by the coil winding 300b to the cooling liquid in the oil-groove channels 301b, thereby improving heat dissipation efficiency.

Alternatively, as shown in FIG. 11, the first metal pressing plates 2021b may be arranged at the first side of the coil winding 300b, and the first metal pressing plates 2021b abut against the coil winding 300b to form the oil-groove channel 301b between the first metal pressing plate 2021b and the first side surface of the yoke 203b of the stator core 200b. To secure the coil winding 300b, first slot wedges 2022b are arranged at the second side of the coil winding 300b, with a certain gap between each of the first slot wedges 2022b and the corresponding raised ribs 1031b of the sealing plate 103b. This prevents the force acting on the coil winding 300b during motor operation from being transmitted to the sealing plate 103b through the first slot wedges 2022b, which could otherwise reduce the sealing effect. With the first metal pressing plates 2021b arranged on the first side of the coil winding 300b, the eddy current loss of the first metal pressing plates 2021b is reduced, while the contact area between the cooling liquid and the stator core 200b is increased, thereby improving the heat dissipation effect of the motor.

As shown in FIG. 12, in another specific embodiment, the coil winding 300b includes a bottom winding 302b and a top winding 303b. The bottom winding 302b abuts against the first side surface of the yoke portion 203b of the stator core 200b, and a second slot wedge 2023b is provided between the top winding 303b and the corresponding raised rib 1031b of the sealing plate 103b to secure the top winding 303b. There is also a certain gap between the second slot wedge 2023b and the corresponding raised rib 1031b of the sealing plate 103b, preventing the force acting on the coil winding 300b during motor operation from being transmitted to the sealing plate 103b through the second slot wedges 2023b, which could otherwise reduce the sealing effect. In addition, the oil-groove channels 301b are formed between the bottom winding 302b and the top winding 303b. In this embodiment, the bottom winding 302b and the top winding 303b may be secured through manners such as drip painting, dip painting, or potting. By forming the oil-groove channels 301b between the bottom winding 302b and the top winding 303b, the cooling liquid directly contacts the coil winding 300b, achieving optimal heat dissipation and increasing the slot fill factor of the motor, although the fixing process for the coil winding 300b is relatively complex.

Further, as shown in FIG. 16, the coil winding 300b employs round copper wires 304b, which are wound around the tooth portions 201b to form the coil winding 300b. Specifically, each of the round copper wires 304b is tightly wound around the corresponding tooth portion 201b in both axial and radial directions of the tooth portion 201b, and the corresponding round copper wires 304b on each two adjacent tooth portions 201b tightly attached to each other. In this embodiment, as shown in FIG. 16, the number of round copper wires 304b arranged horizontally (from the perspective of FIG. 16), i.e., along the radial direction of the tooth portions 201b, is ten, and the number arranged vertically (from the perspective of FIG. 16), i.e., along the axial direction of the tooth portions 201b, is twelve. In a case that the oil-groove channels 301b are provided between the bottom winding 302b and the top winding 303b, each of the bottom winding 302b and the top winding 303b may have six vertically arranged (from the perspective of FIG. 16) round copper wires 304b, to fully utilize the space within the winding slots 202b and thus increasing the slot fill factor of the motor. In addition, as shown in FIG. 16, adhesive layers 305b are formed between the round copper wires 304b. In this embodiment, the adhesive layers 305b are formed between the round copper wires 304b through a potting process to bond and secure the round copper wires 304b to each other.

Of course, as shown in FIG. 13, to reduce the difficulty of the fixing process for the coil winding 300b, second metal pressing plates 2024b are fixed at a bottom of the top winding 303b and a top of the bottom winding 302b, respectively, with each of the oil-groove channels 301b being formed between the corresponding two of the second metal pressing plates 2024b. With the two second metal pressing plates 2024b and the oil-groove channels 301b formed in the middle region of the coil winding 300b, the coil winding 300b is divided into two parts, namely the bottom winding 302b and the top winding 303b. This reduces the difficulty of fixing the coil winding 300b while improving the heat dissipation effect of the motor.

The terms such as "first", "second" and the like in the specification, claims, and accompanying drawings of the present application are intended to distinguish different objects rather than describe a particular sequence. Moreover, the terms "comprise", "include", and any variations thereof are intended to cover non-exclusive inclusion. For example, a process, method, system, product, or device that includes a series of steps or units is not limited to the listed steps or units, but may include steps or units that are not listed.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A motor cooling structure, comprising:
a motor housing (100a), wherein the motor housing (100a) is provided with an oil inlet (101a) and an oil outlet (102a);
a stator core (200a) disposed inside the motor housing (100a), wherein an oil path channel is formed between the stator core (200a) and the motor housing (100a), the oil inlet (101a) and the oil outlet (102a) are both in communication with the oil path channel, and the stator core (200a) comprises tooth portions (201a), with winding slots (202a) formed between adjacent tooth portions (201a); and
a coil winding (300a), wherein the coil winding (300a) is sleeved on the tooth portions (201a), to make the coil winding (300a) be located inside the winding slots (202a); the winding slots (202a) are provided with oil-groove channels (301a), the oil-groove channels (301a) are located at an axial end of the coil winding (300a) and are in communication with the oil path channel, to allow a cooling liquid to flow into the oil-groove channels (301a) through the oil path channel to cool the coil winding (300a) for heat dissipation.

2. The motor cooling structure according to claim 1, wherein the stator core (200a) comprises a yoke portion (203a) connected to lower ends of the tooth portions (201a), the coil winding (300a) has a first side and a second side opposite to each other, and the first side of the coil winding (300a) is close to the yoke portion (203a) of the stator core (200a); and
a sealing plate (103a) is provided inside the motor housing (100a), the sealing plate (103a) is located at the second side of the coil winding (300a), a plurality of raised ribs (1031a) are uniformly provided on the sealing plate (103a) in a circumferential direction, and the plurality of raised ribs (1031a) correspond to the winding slots (202a) respectively.

3. The motor cooling structure according to claim 2, wherein first metal pressing plates (2021a) are arranged in the winding slots (202a), and the first metal pressing plates (2021a) are located at the first side of the coil winding (300a) or the second side of the coil winding (300a).

4. The motor cooling structure according to claim 3, wherein the first metal pressing plates (2021a) are arranged at the first side of the coil winding (300a) and abut against the coil winding (300a), the oil-groove channels (301a) are formed between the first metal pressing plates (2021a) and the yoke portion (203a) of the stator core (200a), and a first slot wedge (2022a) is arranged at the second side of the coil winding (300a) to fix the coil winding (300a).

5. The motor cooling structure according to claim 3, wherein the first metal pressing plates (2021a) are arranged at the second side of the coil winding (300a), the first side of the coil winding (300a) abuts the yoke portion (203a) of the stator core (200a), and the oil-groove channels (301a) are formed between the first metal pressing plates (2021a) and the raised ribs (1031a) of the sealing plate (103a).

6. The motor cooling structure according to claim 2, wherein the coil winding (300) comprises a bottom winding (302a) and a top winding (303a), the bottom winding (302a) abuts the yoke portion (203a) of the stator core (200a), a second slot wedge (2023a) is arranged between the top winding (303a) and each of the raised ribs (1031a) of the sealing plate (103a) for fixing the top winding (303a), and the oil-groove channels (301a) are formed between the bottom winding (302a) and the top winding (303a).

7. The motor cooling structure according to claim 6, wherein second metal pressing plates (2024a) are fixed at a bottom of the top winding (303a) and a top of the bottom winding (302a) respectively, and each of the oil-groove channels (301a) is located between corresponding two of the second metal pressing plates (2024a).

8. The motor cooling structure according to claim 6, wherein the coil winding (300a) is fixed by means of paint dripping, paint dipping or potting.

9. The motor cooling structure according to claim 1, wherein the stator core (200a) has an inner cylindrical surface (204a) and an outer cylindrical surface (205a), with the inner cylindrical surface (204a) close to a motor shaft (104a) and the outer cylindrical surface (205a) away from the motor shaft (104a);
the oil path channel comprises a first oil path channel (2041a) and a second oil path channel (2051a), the first oil path channel (2041a) is provided on a side of the stator core (200a) where the inner cylindrical surface (204a) is located, the second oil path channel (2051a) is provided on another side of the stator core (200a) where the outer cylindrical surface (205a) is located, each of the oil-groove channels (301a) is in communication with both the first oil path channel (2041a) and the second oil path channel (2051a), and both the oil inlet (101a) and the oil outlet (102a) are in communication with the second oil path channel (2051a).

10. The motor cooling structure according to claim 1, wherein round copper wires (304a) are wound around the tooth portions (201a) to form the coil winding (300a), each of the round copper wires (304a) is tightly wound around the corresponding tooth portion (201a) in both axial and radial directions, the corresponding round copper wires (304a) on each two adjacent tooth portions (201a) are tightly attached to each other, with an adhesive layer (305a) being provided between the corresponding round copper wires (304a).

11. The motor cooling structure according to any one of claims 1 to 10, wherein a plurality of flow baffle elements (206a) are uniformly distributed along a circumferential direction on the oil path channel, to make the cooling liquid flow in a directional manner.

12. A motor cooling structure, comprising:
a motor housing (100b), wherein the motor housing (100b) is provided with an oil inlet (101b) and an oil outlet (102b);
a stator core (200b) disposed inside the motor housing (100b), wherein an oil path channel is formed between the stator core (200b) and the motor housing (100b), the oil inlet (101b) and the oil outlet (102b) are both in communication with the oil path channel, and the stator core (200b) comprises tooth portions (201b), with winding slots (202b) formed between adjacent tooth portions (201b); and wherein the motor housing (100b) is provided with a housing oil path channel (105b) in communication with the oil path channel; and/or, the stator core (200b) is provided with a core oil path channel (2031b) in communication with the oil path channel; and
a coil winding (300b), wherein the coil winding (300b) is sleeved on the tooth portions (201b), to make the coil winding (300b) be located inside the winding slots (202b); the winding slots (202b) are provided with oil-groove channels (301b), the oil-groove channels (301b) are located at an axial end of the coil winding (300b) and are in communication with the oil path channel, to allow a cooling liquid to flow into the oil-groove channels (301b) through the oil path channel to cool the coil winding (300b) for heat dissipation.

13. The motor cooling structure according to claim 12, wherein the stator core (200b) comprises a yoke portion (203b) having a first side surface and a second side surface opposite to each other, the tooth portions (201b) are connected to the first side surface of the yoke portion (203b), and the second side surface of the yoke portion (203b) abuts the motor housing (100b);
the coil winding (300b) has a first side and a second side opposite to each other, the first side of the coil winding (300b) is close to the first side of the yoke portion (203b), and the core oil path channel (2031b) is provided on the second side surface of the yoke portion (203b);
the motor housing (100b) comprises a bottom wall (108b) abutting the second side surface of the yoke portion (203b), and the housing oil path channel (105b) is provided on the bottom wall (108b) of the motor housing (100b); and
a sealing plate (103b) is provided inside the motor housing (100b), the sealing plate (103b) is located at the second side of the coil winding (300b), a plurality of raised ribs (1031b) are uniformly provided on the sealing plate (103b) in a circumferential direction, and the plurality of raised ribs (1031b) correspond to the winding slots (202b) respectively.

14. The motor cooling structure according to claim 13, wherein the stator core (200b) has an inner cylindrical surface (204b) and an outer cylindrical surface (205b), with the inner cylindrical surface (204b) close to the motor shaft (104b) and the outer cylindrical surface (205b) away from the motor shaft (104b);
the oil path channel comprises a first oil path channel (2041b) and a second oil path channel (2051b), the first oil path channel (2041b) is provided on a side of the stator core (200b) where the inner cylindrical surface (204b) is located, the second oil path channel (2051b) is provided on another side of the stator core (200b) where the outer cylindrical surface (205b) is located, each of the oil-groove channels (301b) is in communication with both the first oil path channel (2041b) and the second oil path channel (2051b), and both the oil inlet (101b) and the oil outlet (102b) are in communication with the second oil path channel (2051b).

15. The motor cooling structure according to claim 14, wherein a plurality of first grooves are formed on the second side surface of the yoke portion (203b), and the plurality of first grooves are distributed along the circumferential direction of the stator core (200b) to form the core oil path channel (2031b); and
each of the plurality of first grooves extends from the inner cylindrical surface (204b) of the stator core (200b) to the outer cylindrical surface (205b) of the stator core (200b), to be in communication with both the first oil path channel (2041b) and the second oil path channel (2051b).

16. The motor cooling structure according to claim 14, wherein the motor housing (100b) comprises an inner ring wall (106b) and an outer ring wall (107b) opposite to each other, and a mounting cavity for mounting the stator core (200b) is defined by the inner ring wall (106b), the outer ring wall (107b) and the bottom wall (108b);
a plurality of second grooves are formed on the bottom wall (108b) of the motor housing (100b), and the plurality of second grooves are distributed along the circumferential direction of the motor housing (100b) to form the housing oil path channel (105b);
each of the plurality of second grooves extends from the inner ring wall (106b) of the motor housing (100b) to the outer ring wall (107b) of the motor housing (100b) to be in communication with both the first oil path channel (2041b) and the second oil path channel (2051b).

17. The motor cooling structure according to claim 13, wherein first metal pressing plates (2021b) are arranged in the winding slots (202), and the first metal pressing plates (2021b) are located at the first side of the coil winding (300b) or the second side of the coil winding (300b).

18. The motor cooling structure according to claim 17, wherein the first metal pressing plates (2021b) are arranged at the first side of the coil winding (300b) and abut against the coil winding (300b), the oil-groove channels (301b) are formed between the first metal pressing plates (2021b) and the first side surface of the yoke portion (203b), and a first slot wedge (2022b) is arranged at the second side of the coil winding (300b) for fixing the coil winding (300b).

19. The motor cooling structure according to claim 17, wherein the first metal pressing plates (2021b) are arranged at the second side of the coil winding (300b), the first side of the coil winding (300b) abuts the first side surface of the yoke portion (203b), and the oil-groove channels (301b) are formed between the first metal pressing plates (2021b) and the raised ribs (1031b) of the sealing plate (103b).

20. The motor cooling structure according to claim 13, wherein the coil winding (300b) comprises a bottom winding (302b) and a top winding (303b), the bottom winding (302b) abuts against the first side surface of the yoke portion (203b), a second slot wedge (2023b) is arranged between the top winding (303b) and each of the raised ribs (1031b) of the sealing plate (103b) for fixing the top winding (303b), and the oil-groove channels (301b) are formed between the bottom winding (302b) and the top winding (303b).

21. The motor cooling structure according to claim 20, wherein second metal pressing plates (2024b) are fixed at a bottom of the top winding (303) and a top of the bottom winding (302b) respectively, and each of the oil-groove channels (301b) is located between corresponding two of the second metal pressing plates (2024b).

22. The motor cooling structure according to claim 20, wherein the coil winding (300b) is fixed by means of paint dripping, paint dipping or potting.

23. The motor cooling structure according to claim 12, wherein the coil winding (300b) is formed by winding round copper wires (304b) around the tooth portions (201b), each of the tooth portions (201b) is provided with the corresponding round copper wire (304b) tightly wound the tooth portion (201b) in both axial and radial directions of the tooth portions (201b) respectively, the corresponding round copper wires (304b) of each two adjacent tooth portions (201b) are tightly attached to each other, with an adhesive layer (305b) being provided between the corresponding round copper wires (304b).

24. The motor cooling structure according to any one of claims 12 to 23, wherein a plurality of flow baffle elements (206b) are uniformly distributed along a circumferential direction on the oil path channel, to make the cooling liquid flow in a directional manner.
